(19) Europäisches Patentamt
European Patent Office
Office européen des brevets

(11) Veröffentlichungsnummer : **0 219 809 B1**

# (12) EUROPÄISCHE PATENTSCHRIFT

(45) Veröffentlichungstag der Patentschrift : **09.01.91 Patentblatt 91/02**

(51) Int. Cl.$^5$ : **C08C 19/44**

(21) Anmeldenummer : **86114294.1**

(22) Anmeldetag : **16.10.86**

## (54) Salze mehrwertiger Kationen von Polymerisaten von konjugierten Dienen.

(30) Priorität : **24.10.85 DE 3537770**

(43) Veröffentlichungstag der Anmeldung : **29.04.87 Patentblatt 87/18**

(45) Bekanntmachung des Hinweises auf die Patenterteilung : **09.01.91 Patentblatt 91/02**

(84) Benannte Vertragsstaaten : **BE DE FR GB IT NL**

(56) Entgegenhaltungen : **FR-A- 2 352 008**

(56) Entgegenhaltungen : **PATENTS ABSTRACTS OF JAPAN, Band 5, Nr. 195 (C-83)[867], 11. Dezember 1981; & JP-A-56 118 405 (ASAHI KASEI KOGYO K.K.) 17-09-1981 (Cat. D)**

(73) Patentinhaber : **BASF Aktiengesellschaft**
**Carl-Bosch-Strasse 38**
**D-6700 Ludwigshafen (DE)**

(72) Erfinder : **Bronstert, Klaus, Dr.**
**Gartenstrasse 26**
**D-6719 Carlsberg (DE)**
Erfinder : **Mueller, Wolfgang F., Dr.**
**Hahnenweg 20**
**D-6730 Neustadt (DE)**

**EP 0 219 809 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft kautschukartige Polymerisate von konjugierten Dienen mit Carboxylendgruppen, die als Salze vorliegen, wobei die Salze Metallkationen oder Metallkationenkomplexe enthalten, die mindestens zwei positive Ladungen tragen. Die Polymerisate der konjugierten Diene können als Homopolymerisate der konjugierten Diene oder als Polymerisate vorliegen, wobei das Comonomere ein anderes konjugiertes Dien oder eine vinylaromatische Verbindung sein kann.

Polymerisate bzw. Copolymerisate von konjugierten Dienen und/oder Vinylaromaten, z.B. Blockpolymerisate von Dienen und Styrol, die mit Lithiumkohlenwasserstoff erhalten wurden und die Carboxylendgruppen tragen, sind bekannt. So z.B. aus der DE-OS 27 23 905, wobei man diese Verbindungen dadurch erhält, daß man zunächst Styrol und danach Styrol/Isopren-Mischung der Polymerisation unterwirft und dann das Blockpolymerisat zunächst mit Alkylenoxid, z.B. Ethylenoxid umsetzt und das Umsetzungsprodukt einer weiteren Reaktion mit einem cyclischen Dicarbonsäureanhydrid einer ungesättigten Dicarbonsäure unterwirft. Man erhält Polymerisate, die neben einer Carboxylendgruppe eine reaktionsfähige, polymerisierbare Doppelbindung am Kettenende tragen. Die nach diesem Verfahren erhaltenen polymerisierbaren Polymerisate werden mit radikalisch polymerisierbaren Monomeren gemischt und in Gegenwart von Radikalbildnern zu Pfropfmischpolymeren polymerisiert. Aus der DE-OS 27 23 905 ist kein Hinweis auf die weitere Umsetzung der kettenendständigen Carboxylgruppe zu entnehmen.

Aus der japanischen Patentschrift JA 56/118 405 ist die Umsetzung von Blockpolymerisaten aus Dienen (z.B. Butadien) und Vinylaromaten (z.B. Styrol) mit ungesättigten Dicarbonsäuren bzw. Dicarbonsäurederivaten zu carboxylgruppenhaltigen Blockpolymerisaten bekannt. Die Blockpolymerisate werden durch anionische Lösungspolymerisation von Dien/Vinylaromatgemischen mit Lithiumalkylen als Initiatoren hergestellt. Nach der Isolierung der Blockpolymerisate erfolgt in einem separaten Verfahrensschritt bei hoher Temperatur (190 bis 210°C) die Umsetzung der Blockpolymerisate mit der ungesättigten Dicarbonsäureverbindung zu den carboxylgruppenhaltigen Blockpolymerisaten in einem Extruder. Die carboxylgruppenhaltigen Blockpolymerisate werden anschließend in Lösung mit monovalenten Metallverbindungen (z.B. Alkalialkoholaten oder Alkalihydroxiden) versetzt und in ionisch vernetzte Blockpolymerisate überführt. Die ionisch vernetzten Blockpolymerisate besitzen gegenüber den nicht vernetzten Blockpolymerisaten eine bessere mechanische Festigkeit und eine geringere bleibende Dehnung. Die ionisch vernetzten Blockpolymerisate werden als thermoplastische Elastomere bei niedrigem Vinylaromatengehalt oder als thermoplastische Formmassen bei hohem Vinylaromatengehalt eingesetzt.

Aufgabe der vorliegenden Erfindung war es dagegen, die mechanischen und die verarbeitungstechnischen Eigenschaften von kautschukartigen Polymeren auf Basis von Dienpolymerisaten bzw. von Diencopolymerisaten mit Vinylaromaten zu verbessern. Kautschukartige Polymere auf Basis von Dienpolymerisaten oder -copolymerisaten haben häufig den Nachteil, daß sie einen kalten Fluß besitzen. Bei längerem Lagern verkleben und verbacken deshalb die kautschukartigen Polymerisate. Duch Erhöhen des Molekulargewichtes kann der kalte Fluß reduziert werden, doch hat man dann den Nachteil, daß sich die kautschukartigen Polymerisate zunehmend schlechter verarbeiten lassen.

Es wurde nun gefunden, daß diese Aufgabe durch Polymerisate von konjugierten Dienen mit Carboxylendgruppen gelöst wird, die als Salze der allgemeinen Formel vorliegen

$$[R{-}Y_a{-}COR'{-}COO]^{\ominus}_{n}\ M^{n\oplus}$$

worin bedeutet:

M ein Metallkation oder einen Metallkationenkomplex,
R' einen zweiwertigen organischen Rest,
Y eine einkondensierte Einheit eines Alkylenoxids
R ein Polymerisat oder Copolymerisat von konjugierten Dienen und/oder Vinylaromaten,
a die Zahlen 0 bis 10
n die Zahlen 0 bis 4, wobei der Fall, daß nur Salze der allgemeinen Formel I mit a = 0 vorliegen, ausgeschlossen ist.

Ein weiterer Gegenstand der Erfindung ist ein Verfahren zur Herstellung von Polymerisaten der konjugierten Diene durch anionische Polymerisation dieser Verbindungen, Umsetzung der erhaltenen Polymerisate mit Alkylenoxid und cyclischen Dicarbonsäureanhydriden, wobei man die erhaltenen Umsetzungsprodukte mit Metallalkoholaten, Metallalkylen, Metallhalogeniden, Metalloxiden oder Metallhydroxiden umsetzt und gegebenenfalls überschüssiges Dicarbonsäureanhydrid derivatisiert.

Außerdem sind Gegenstände der Erfindung die Verwendung derartiger Polymerisate zur Modifizierung thermoplastischer Massen und die Verwendung als vulkanisierbare Massen.

Weitere Gegenstände der Erfindung ergeben sich aus der nachfolgenden Beschreibung.

Die erfindungsgemäßen Salze der Polymerisate der konjugierten Diene und der Copolymerisate konjugierter Diene untereinander bzw. mit Vinylaromaten mit Carboxylendgruppen haben hervorragende mechanische Eigenschaften bei gleichzeitig sehr gutem Verarbeitungsverhalten. Insbesondere haben die erfindungsgemäßen Verbindungen gegenüber nicht funktionalisierten Polymerisaten gleicher Zusammensetzung und gleichen Molekulargewichts einen stark verminderten kalten Fluß bei nahezu unverändert guter Fließfähigkeit.

In den Salzen der oben angegebenen allgemeinen Formel ist M ein Metallkation oder ein Metallkationenkomplex. Die Kationen bzw. die Kationenkomplexe haben mindestens zwei positive Ladungen. In der Formel kann die Zahl n außer 2 auch 3 oder 4 sein. Bevorzugt sind Metallkationen, wie $AL^{+++}$, $Mg^{++}$, $Zn^{++}$, $Ni^{++}$, $Zr^{++}$ oder $Cd^{++}$.

Es können aber auch Kationenkomplexe Verwendung finden, z.B. solche, die mehrere Metallkationen enthalten. Geeignet sind folgende Strukturen : $[Me–O–[–Me(OR'')–O–]r–Me]^{4+}$

Me kann $Al^{+++}$ oder $Cr^{+++}$ sein ; r ist eine ganze Zahl zwischen 0 und 20 ; vorzugsweise 0 und 10 ; R'' ist Wasserstoff oder ein kurzkettiges Alkylradikal.

In der allgemeinen Formel I ist R'ein zweiwertiger organischer Rest einer Dicarbonsäure. Derartige Gruppierungen ergeben sich, wenn man durch anionische Polymerisation unter Lithiumalkyl-Katalyse erhaltene Dienpolymerisate zunächst mit Alkylenoxid und anschließend mit einem cyclischen Dicarbonsäureanhydrid umsetzt. Als cyclische Dicarbonsäureanhydride, die schlieißlich den entsprechenden Rest in der allgemeinen Formel I ergeben, kommen aliphatische, cycloaliphatische oder aromatische Dicaröonsäureanhydride in Frage. Bevorzugt sind derartige Gruppierungen, die von der Maleinsäure, der Bernsteinsäure, der Phthalsäure, der Glutarsäure oder der 1,8-Naphthalindicarbonsäure herrühren. R' ist z.B. $–CH_2–CH_2–$, $–CH=CH–$, $–CH_2–CH_2–CH_2–$

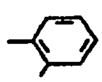 , 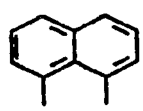 , 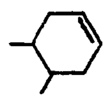 , 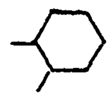 , 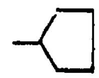

wobei $C_1–C_3$–Alkyl oder Halogensubstituierung möglich ist.

Die Gruppierung Y ist eine Alkylenoxidgruppierung. Bevorzugt sind solche Gruppierungen, die vom Ethylenoxid, Propylenoxid oder Styroloxid erhalten werden. Erfindungsgemäß sind auch solche Salze, bei denen -COR'-COO- direkt mit dem Radikal R in Verbindung steht, nämlich dann, wenn a = 0 ist. In der allgemeinen Formel ist - wie oben bereits ausgeführt - n = 2, vorzugsweise 3 oder 4, a kann 0 sein oder eine Zahl von 1 bis 10, vorzugsweise 1bis 4.

R ist ein Radikal eines Polymerisats eines konjugierten Diens, das durch Lithiumalkyleinwirkung auf die Ausgangsmonomeren erhalten wurde. Es können die konjugierten Diene für sich allein polymerisiert werden. Beispiele von konjugierten Dienen, die in die Polymerisate einpolymerisiert sein können, sind Butadien, Isopren oder 2,3-Dimethylbutadien. Besonders bevorzugt sind Butadien oder Isopren.

Es können aber auch Copolymerisate, das Radikal R bilden. Ausgangsstoffe für diese Polymerisate sind neben den Dienen monovinylaromatische Monomere, wie Styrol, seitenkettenalkylierte Styrole, wie α-Methylstyrol und die kernsubstituierten Styrole, wie Vinyltoluol oder Ethylvinylbenzol. Die monovinylaromatischen Monomeren können aber auch in Mischungen eingesetzt werden. Bevorzugt ist jedoch Styrol für sich allein.

Statistische Copolymerisate aus Dienen und monovinylaromatischen Verbindungen erhält man, wenn man Mischungen aus z.B. Styrol und Butadien z.B. in Gegenwart von Ethern wie Tetrahydrofuran der Polymerisation unterwirft. Die Glasübergangstemperatur dieser Polymeren liegt unter 0°C, vorzugsweise unter –15°C. Der Polymerisatanteil R kann auch so aufgebaut sein, daß die olefinischen Doppelbindungen, die von den Dienbausteinen herrühren, ganz oder teilweise hydriert sind.

Die erfindungsgemäßen Salze von Carboxylgruppen enthaltenden Polymerisaten finden als Kautschuke oder vulkanisierbare Massen Verwendung. Der Polymerisatanteil R enthält mehr als 50 Gew.% Anteil an einpolymerisierten Dien, vorzugsweise sind zwischen 70 und 100% Dien einpolymerisiert. Der

restliche Anteil, der sich auf 100% ergänzt, entfällt auf die einpolymerisierten monovinylaromatischen Verbindungen im Radikalrest R.

Die Polymerradikale R haben eine Molmasse, die im Bereich von 5000 bis 500000, vorzugsweise im Bereich von 10000 bis 250000 liegt.

Die einkondensierte Einheit Y eines Alkylenoxids erhält man, indem man das noch "lebende", durch Lithiumalkylpolymerisation erhaltene Polymerisat mit dem Alkylenoxid umsetzt. Bevorzugt erfolgt die Umsetzung im Verhältnis 1 Mol Alkylenoxid zu 1 Mol des lebenden Polymeren.

Das Verfahren zur Herstellung der Polymerisate der konjgierten Diene ist die anionische Polymerisation der Diene, die Umsetzung der erhaltenen Polymerisate mit Alkylenoxid und die anschließende Umsetzung mit cyclischen Dicarbonsäureanhydriden. Die erhaltenen, Carboxylendgruppen enthaltenden Polymerisate werden anschließend mit Metallalkoholaten oder mit Metallalkylen umgesetzt. Die Umsetzung mit Metallalkoholaten kann dabei so erfolgen, daß die Zahl der Carboxylgruppen enthaltenden Polymerradikale m gleich der Zahl der Ladungen des Metallkations bzw. des Metallkationkomplexes n ist. Man kann aber auch, wie oben angegeben, die Verhältnisse so wählen, daß m 1 bis 10 ist, wobei n 2, 3 oder auch 4 ist. Die Umsetzung von Metallalkoholaten mit Carbonsäuren ist bekannt. Sie ist z.B. in Kirk-Orthmer "Encyclopedia of Chemical Technology", 2. Ausgabe, Band 1, Seite 832 bis 851 beschrieben.

Die Umsetzung der Carboxylgruppen enthaltenden Polymerisate kann aber auch mit Metallalkylen erfolgen ; beispielsweise Aluminiumtriethyl, Aluminiumtri-tertiärbutyl, Zinkdiethyl u.a. Das mehrwertige Kation kann auch in Form seiner Oxide oder Hydroxide zugesetzt werden ; z.B. ZnO. Überschüssiges Dicarbonsäureanhydrid muß, um gute Eigenschaften zu erhalten durch Derivatisieren maskiert oder entfernt werden ; z.B. durch Umsetzen des Dicarbonsäureanhydrids mit Metallhydroxiden (z.B. NaOH) zu den entsprechenden Salzen oder durch Umsetzen mit Metallalkoholaten zu den entsprechenden Salzen der Halbester der Dicarbonsäuren. Eine andere Möglichkeit ist das Entfernen des Dicarbonsäureanhydrids mittels hochsiedenden Schleppmittels bei hohen Temperaturen im Vakuum.

Die erfindungsgemäßen Salze der Carboxylgruppen enthaltenden Polymerisate können zur Modifizierung von thermoplastischen Massen oder als vulkanisierbare Massen Verwendung finden.

Beispiele (Salze mehrwertiger Kationen von Polymerisaten von konjugierten Dienen)

Herstellung der Carboxylgruppen enthaltenden Dienpolymerisate

In einem 5 l-Edelstahl-Normkessel wird unter Stickstoff-Atmosphäre gereinigtes und getrocknetes Cyclohexan als Lösungsmittel eingefüllt und die entsprechende Menge des entstabilisierten Diens oder der entstabilisierten Monomerenmischung zugegeben. Zur Entstabilisierung wird Butadien mit n-Butyllithium versetzt und bei –5°C abdestilliert ; Isopren wird durch Destillation über eine mit $Al_2O_3$ gefüllte Kolonne vom Stabilisator befreit. Dann wird die Reaktionsmischung auf 40°C erwärmt und die Polymerisation durch Zugabe der berechneten Initiatormenge (sek. Butyllithium) gestartet. Bei einer Innentemperatur von 65 bis 70°C wird in 3 Stunden auspolymerisiert ; dann wird die Reaktionsmischung auf 40°C abgekühlt und das in 50 ml Cyclohexan gelöste Alkylenoxid wird zur lebenden Polymerlösung gegeben, um das Carbanion in das entsprechende polymere Alkoholat-Anion zu überführen ; für vollständigen Umsatz wird 1 Stunde gerührt. Dann wird das cyclische Dicarbonsäureanhydrid zugegeben und es wird eine weitere Stunde bei 40°C gerührt. Es entsteht der polymere Halbester der Dicarbonsäure als Li-Salz, der direkt mit dem mehrwertigen Kation umgesetzt wird.

Das mehrwertige Kation wird als Alkoholat oder als Metallalkyl gelöst in Toluol, THF oder in einem anderen inerten Kohlenwasserstoff-Lösungsmittel, zu dem polymeren Halbester gegeben. Das Molverhältnis von polymerem Halbester zu Kation beträgt 1 zu 1 bis 1 zu 10. Die Viskosität der Polymerlösung steigt nach Zugabe des mehrwertigen Kations sofort stark an. Um überschüssige Alkyl-oder Alkoxygruppen vom Kation abzuspalten und das mehrwertige Kation in die entsprechenden Oxo- bzw. Hydroxokomplexe zu überführen, kann Wasser in äquimolarer Menge oder im Überschuß zur Polymerlösung gegeben werden. Vor der Aufarbeitung werden 0,5 Gew.% eines phenolischen Stabilisators, bezogen auf das Polymere, zugegeben. Dann wird die viskose Polymerlösung durch Eingießen in Isopropanol ausgefällt, zweimal mit Isopropanol gewaschen und unter $N_2$-Atmosphäre bei 90°C über Nacht im Vakuumtrockenschrank getrocknet.

Ausführung der einzelnen Beispiele siehe nachfolgende Tabelle.

Tabelle 1 : Synthese und Analytik der Salze mehrwertiger Kationen von Polymerisaten von konjugierten Dienen

**Tabelle 1**

| Beispiel Nr. | Cyclohexan [ml] | BuLi [mMol] | Dien Typ | Dien [g] | Alkylenoxid Typ | Alkylenoxid [mMol] | Anhydrid Typ | Anhydrid [mMol] | Variante | Me-Verbindung Typ | Me-Verbindung [mMol] | VZ vor Kationenzugabe | VZ nach Kationenzugabe |
|---|---|---|---|---|---|---|---|---|---|---|---|---|---|
| 1 | 3.000 | 6,3 | Bu | 500 | EO | 12,0 | MSA | 12,0 | 3 | Al-Isopropylat | 6,0 | 123 | 208 |
| 2 | 3.000 | 8,5 | Bu | 500 | PO | 12,0 | BSA | 16,0 | " | Al-Isopropylat | 17,0 | 95 | 153 |
| 3 | 3.000 | 10,0 | I | 500 | EO | 20,0 | MSA | 20,0 | " | Zn-Isopropylat | 20,0 | 84 | 137 |
| 4 | 3.000 | 8,5 | I | 500 | Styroloxid | 9,0 | BSA | 17,0 | " | Zn-Isopropylat | 17,0 | 97 | 154 |
| 5 | 3.000 | 7,2 | Bu | 500 | EO | 8,0 | Itaconsäureahydrid | 15,0 | " | Zn-Isopropylat | 15,0 | 108 | 177 |
| 6 | 3.000 | 7,7 | Bu<br>I | 250<br>250 | EO | 8,5 | BSA | 16,0 | " | Zn-Isopropylat | 17,0 | 104 | 169 |
| 7 | 3.000 | 7,2 | Bu<br>S | 450<br>50 | EO | 8,0 | PSA | 14,0 | " | Al-Isopropylat | 15,0 | 110 | 178 |

BuLi: se. Butyllithium; Bu: Butadien; I: Isopren; S: Styrol; EO: Ethylenoxid; PO: Propylenoxid;
PSA: Phthalsäureanhydrid; MSA: Maleinsäureanhydrid; BSA: Bernsteinsäureanhydrid;
VZ: Viskositätszahl gemessen bei 25°C in Toluol (0,5 g Polymer in 120 ml Toluol) gemäß DIN 51 562

Beispiel 8

In diesem Beispiel wird die Verringerung des kalten Flusses bei Polybutadien nach dem erfindungsgemäßen Verfahren durch Umwandlung der Carboxylendruppe in das Al-Salz gezeigt.

Eine Polymerlösung, die wie in Beispiel 2 hergestellt wurde, wurde in 2 Teile unterteilt. Teil 1 wurde ohne Vorbehandlung mit Isopropanol ausgefällt und zum Polymer aufgearbeitet. Teil 2 wird vor der Aufarbeitung mit 9 mMol Al-Ethylat versetzt. Aus den Polymeren wurden Kugeln von je 20 g geformt, diese auf Glasplatten gelegt und bei Zimmertemperatur die mit der Zeit wachsende Fläche bestimmt, die von den auseinanderfließenden Kugeln bedeckt wird.

Tabelle: Bestimmung des kalten Flusses von Polybutadien

| $VZ_{Toluol}$ | Ausgangspolymer | Polymer Al-Isopropylat |
|---|---|---|
| Kalter Fluß | 95,3 | 154 |
| nach Minuten | Fläche in $cm^2$ | Fläche in $cm^2$ |
| 0 | 8 | 7,1 |
| 15 | 23,7 | 8,0 |
| 60 | 26,4 | 9,0 |
| 300 | 52,8 | 15,9 |
| 1440 | 69,4 | 28,3 |
| 5760 | 78,5 | 28,5 |

## Ansprüche

1. Polymerisat oder Copolymerisat von konjugierten Dienen und Vinylaromaten mit einer Carboxylendgruppe, dadurch gekennzeichnet, daß es als Salz der allgemeinen Formel I vorliegt.

$$[R-Y_a-CO\ R'-COO]^{\ominus}_n\ M^{n\oplus}$$

worin bedeutet:

M ein Metallkation oder einen Metallkationenkomplex,
R' einen zweiwertigen organischen Rest,
Y eine einkondensierte Einheit eines Alkylenoxids
R ein Polymerisat oder Copolymerisat von konjugierten Dienen und/oder Vinylaromaten,
a die Zahlen 0 bis 10
n die Zahlen 2 bis 4, wobei der Fall, daß nur Salze der allgemeinen Formel I mit a=0 vorliegen, ausgeschlossen ist.

2. Polymerisat nach Anspruch 1, dadurch gekennzeichnet, daß M ein Metallkation ausgewählt aus $Al^{+++}$, $Mg^{++}$, $Ca^{++}$, $Ba^{++}$, $Zn^{++}$, $Ni^{++}$, $Zr^{++}$ oder $Cd^{++}$ ist.

3. Polymerisat nach Anspruch 1, dadurch gekennzeichnet, daß M ein Oxo- oder Hydroxokationenkomplex des Al, Mg oder Zn ist.

4. Polymerisat nach Anspruch 1, dadurch gekennzeichnet, daß R' einen zweiwertigen Rest ausgewählt aus $-CH_2-CH_2-$, $-CH=CH-$, $-CH_2-CH_2-CH_2-$,

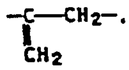, 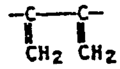

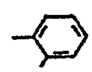, 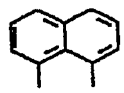, 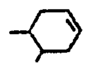, 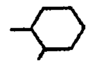, 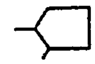

bedeutet, der durch $C_1$–$C_3$–Alkyl oder Halogen substituiert sein kann.

5. Verfahren zur Herstellung von Polymerisaten nach Anspruch 1 durch anionische Polymerisation eines Diens und ggf. eines Vinylaromaten, Umsetzung der erhaltenen Polymerisate mit Alkylenoxid und einem cyclischen Dicarbonsäureanhydrid, dadurch gekennzeichnet, daß man die erhaltenen Umsetzungsprodukte mit Metallalkoholaten, Metallalkylen, Metallhalogeniden, Metalloxiden oder Metallhydroxiden umsetzt.

6. Verfahren nach Anspruch 5 zur Herstellung von Polymerisaten, dadurch gekennzeichnet, daß man überschüssiges cyclische Dicarbonsäureanhydrid anwendet und den Überschuß zusammen mit dem Lösungsmittel evtl. in Gegenwart eines hochsiedenden Schleppmittels bei hoher Temperatur im Vakuum abzieht.

7. Verfahren nach Anspruch 6 zur Herstellung von Polymerisaten, dadurch gekennzeichnet, daß der Überschuß des cyclischen Dicarbonsäureanhydrid vor, oder während der Isolierung der polymerisate derivatisiert wird.

8. Verfahren nach Anspruch 5 zur Herstellung von Polymerisaten, dadurch gekennzeichnet, daß man das überschüssige cyclische Dicarbonsäureanhydrid durch Zugabe von Metallalkoholat in ein Salz eines Halbesters der entsprechenden Dicarbonsäure überführt.

9. Verwendung von Polymerisaten oder Copolymerisaten konjugierter Diene nach Anspruch 1 zur Modifizierung thermoplastischer Massen.

10. Verwendung von Polymerisaten oder Copolymerisaten konjugierter Diene nach Anspruch 1 für vulkanisierbare Massen.

**Claims**

1. A polymer or copolymer of a conjugated diene and aromatic vinyl compound having a carboxyl end group, the said polymer or copolymer being present as a salt of the formula I

where

M is a metal cation or a metal cation complex,
R′ is a divalent organic radical,
Y is a cocondensed unit of an alkylene oxide
R is a polymer or copolymer of a conjugated diene and/or aromatic vinyl compound,
a is from 0 to 10 and
m is from 2 to 4, but not as a salt of the formula I where a is 0.

2. A polymer as claimed in claim 1, wherein M is a metal cation selected from the group consisting of $Al^{+++}$ $Mg^{++}$, $Ca^{++}$, $Ba^{++}$, $Zn^{++}$, $Ni^{++}$, $Zr^{++}$ and $Cd^{++}$.

3. A polymer as claimed in claim 1, wherein M is an oxo or hydroxo cation complex of Al, Mg or Zn.

4. A polymer as claimed in claim 1, wherein R′ is a divalent radical selected from the group consisting of $-CH_2-CH_2-$, $-CH=CH-$, $-CH_2-CH_2-CH_2-$ which may be substituted by $C_1$–$C_3$–alkyl or halogen.

5. A process for preparing a polymer as claimed in claim 1 by anionic polymerization of a diene and, if required, an aromatic vinyl compound, and reacting the resulting polymer with an alkylene oxide and a cyclic dicarboxylic anhydride, which comprises reacting the reaction products obtained with a metal alcoholate, metal alkyl, metal halide, metal oxide or metal hydroxide.

6. A process as claimed in claim 5 for preparing a polymer, wherein excess cyclic dicarboxylic anhydride is used and the excess is removed together with the solvent under reduced pressure at high temperatures in the presence or absence of a high-boiling entrainer.

7. A process as claimed in claim 6 for preparing a polymer, wherein the excess cyclic dicarboxylic anhydride is derivatized before or during the isolation of the polymer.

8. A process as claimed in claim 5 for preparing a polymer, wherein the excess cyclic dicarboxylic

anhydride is converted into a salt of a half-ester of the corresponding dicarboxylic acid by adding a metal alcoholate.

9. The use of a conjugated diene polymer or copolymer as claimed in claim 1, for modifying thermoplastic materials.

10. The use of a conjugated diene polymer or copolymer as claimed in claim 1, for vulcanizable materials.

## Revendications

1. Polymère ou copolymère de diènes conjugués et de composés vinylaromatiques avec un groupe carboxyle terminal, caractérisé en ce qu'il se présente sous la forme de sel de la formule générale I

$$[R-Y_a-CO-R'-COO]^{\ominus}_n M^{n\oplus}$$

dans laquelle

- M représente un cation de métal ou un complexe de cations de métaux,
- R' représente un radical organique divalent,
- Y représente une unité incorporée par condensation d'un oxyde d'alkylène,
- R représente un polymère ou un copolymère de diènes conjugués et/ou de composés vinylaromatiques,
- a représente les nombres 0 à 10,
- n représente les nombres 2 à 4, où est exclu le cas où ne se présentent que des sels de la formule générale I avec a = 0.

2.Polymère selon la revendication 1, caractérisé en ce que M est un cation de métal choisi parmi $AL^{+++}$, $Pg^{++}$, $Ca^{++}$, $Ba^{++}$, $Zn^{++}$, $Ni^{++}$, $Zr^{++}$ ou $Cd^{++}$.

3. Polymère suivant la revendication 1, caractérisé en ce que M représente un complexe d'oxo- ou d'hydroxocations de l'aluminium, du magnésium ou dun zinc.

4. Polymère suivant la revendication 1, caractérisé en ce que R' représente un radical bivalent choisi parmi les suivants : $-CH_2-CH_2-$, $-CH=CH-$, $-CH_2-CH_2-CH_2-$,

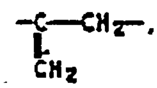 , 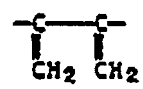

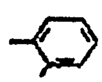 , 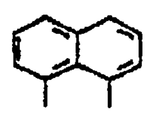 , 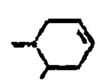 , 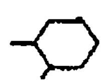 , 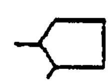

qui peut être substitué par des radicaux alkyle en $C_1$–$C_3$ ou des halogènes.

5. Procédé de préparation de polymères suivant la revendication 1, par polymérisation anionique d'un diène et éventuellement d'un composé vinylaromatique, réaction des polymères obtenus avec un oxyde d'alkylène et un anhydride d'acide dicarboxylique cyclique, caractérisé en ce que l'on fait réagir les produits de réaction obtenus sur des alcoolates de métaux, des alkyl-métaux, des halogénures de métaux, des oxydes de métaux ou des hydroxydes de métaux.

6. Procédé suivant la revendication 5 de préparation de polymères, caractérisé en ce que l'on utilise un anhydride d'acide dicarboxylique cyclique en excès et on chasse l'excès en même temps que le solvant, à température élevée, éventuellement en présence d'un agent d'entraînement à point d'ébullition élevé.

7. Procédé suivant la revendication 6 de préparation de polymères, caractérisé en ce que l'on transforme l'excès d'anhydride d'acide dicarboxylique cyclique en dérivé avant ou pendant l'isolement des polymères.

8. Procédé suivant la revendication 5 de préparation de polymères, caractérisé en ce que l'on convertit l'anhydride d'acide dicarboxylique cyclique excédentaire en un sel d'un hémiester de l'acide dicarboxylique correspondant par l'addition d'un alcoolate de métal.

9. Utilisation de polymères ou de copolymères de diènes conjugués suivant la revendication 1 en vue

de la modification de matières thermoplastiques.

10. Utilisation de polymères de copolymères de diènes conjugués suivant la revendication 1, pour la confection de matières vulcanisables.